# EUROPÄISCHE PATENTSCHRIFT

(11) **EP 2 648 922 B1**
(45) Veröffentlichungstag und Bekanntmachung des Hinweises auf die Patenterteilung: **04.10.2017**
(21) Anmeldenummer: 11790883.0
(22) Anmeldetag: 01.12.2011
(51) Int. Cl.: B42D 13/00, B32B 3/02, B32B 37/10

(54) **MEHRSCHICHTIGER DATENTRÄGER MIT WEICHEM BEREICH UND VERFAHREN**
MULTILAYERED DATA CARRIER HAVING A SOFT REGION AND PROCESS
SUPPORT DE DONNÉES MULTICOUCHE COMPORTANT UNE ZONE SOUPLE ET PROCEDE

(30) Priorität: 07.12.2010 DE 102010053640
(43) Veröffentlichungstag der Anmeldung: 16.10.2013
(73) Patentinhaber: Giesecke+Devrient Mobile Security GmbH, 81677 München (DE)
(72) Erfinder: RIEDL, Josef, 85395 Attenkirchen (DE)
(86) Internationale Anmeldenummer: PCT/EP2011/006031
(87) Internationale Veröffentlichungsnummer: WO 2012/076131

(56) Entgegenhaltungen:
- EP-A2- 0 013 557
- WO-A1-2010/097226
- WO-A2-2009/153056
- FR-A1- 2 935 635
- US-A- 5 852 289

## Beschreibung

Die Erfindung betrifft einen mehrschichtigen tragbaren Datenträger, insbesondere eine Ausweis- oder Chipkarte. Tragbare Datenträger im Sinne der Erfindung sind insbesondere kleine, jederzeit mitführbare Medien, mit denen der Nachweis einer Identität oder einer Berechtigung erbracht werden kann, wie Personalausweise, Führerscheine oder SIM-Karten. Tragbare Datenträger im Sinne der Erfindung sind daneben auch Speicherkarten, etwa Speicherkarten vom Typ Mikro-SD oder Kompaktflash-Karte, sowie Eintrittskarten, Fahrkarten und ähnliche.

Tragbare Datenträger im Sinne der Erfindung bestehen des weiteren stets aus mindestens zwei miteinander verbundenen Schichten.

Tragbare Datenträger der vorgenannten Art werden zumeist aus Kunststofffolien aufgebaut, in dem mehrere Folien beispielsweise zusammenlaminiert werden, um einen Kartenkörper zu bilden. In den Kartenkörper können elektronische Bauelemente eingearbeitet sein. Typische eingearbeitete Bauelemente sind ICs mit einem an der Oberfläche plazierten Kontaktfeld und/ oder ICs mit einer im Inneren des Kartenkörpers ausgebildeten Antennenspule. Die tragbaren Datenträger können auch mit Anzeigeelementen wie Displays oder Leuchtdioden und/ oder Eingabeelementen, wie Schalter oder Sensoren ausgestattet sein.

Tragbare Datenträger der vorgenannten Art besitzen in der Regel eine hohe Biegesteifigkeit, die bei Vorhandensein von elektronischen Bauelementen häufig auch dazu dient, diese zu schützen. Bei starken Biegebeanspruchungen, z.B. bei Auslenkungen eines Kartenbereichs gegenüber dem anderen um mehr als 90°, brechen tragbare Datenträger zumeist. Für bestimmte, in der Regel nicht personenbezogene Anwendungen ist es auch bekannt, flexible tragbare Datenträger bereitzustellen, etwa in Form von folienartigen RFID-Tags. Diese sind jedoch stets zur Befestigung auf steifen Trägern konzipiert und/ oder besitzen nur eine vergleichsweise geringe Lebensdauer.

Zur Verwendung als Datenseiten in Passbüchern ist es ferner bekannt tragbare Datenträger herzustellen, die aus einer in üblicher Weise steifen Hauptfläche bestehen aus der randseitig an einer Seite ein flexibler Abschnitt herausgebildet ist, mit dem die Datenseite in einem Passbuch befestigt wird. Der flexible Randabschnitt ermöglicht dann ein Umblättern der Datenseite. Eine Lösung dieser Art findet sich z.B. in der EP 1861262 B.

Aus der WO 2009/153056 A2 ist es desweiteren bekannt durch Koextrusion eine Folie herzustellen, die in der Fläche aus zwei nebeneinander liegenden Bereichen mit unterschiedlichem Materialeigenschaften besteht. Die Materialien können sich dabei insbesondere in ihrer Elastizität unterscheiden, wobei eines der Materialien flexibel ist und das andere im Vergleich dazu eine große Steifigkeit aufweist. Vorgeschlagen wird mittels derartiger Folien eine elektronische Datenseite für ein Passbuch aufzubauen, wobei der Kartenkörper so in einem Passbuch angeordnet ist, dass der weichere Teil im Nahtbereich liegt. Die Schrift offenbart hierfür entweder eine einschichtigen Ausführung einer solchen Datenseite oder einen durchgängigen blockartigen Mehrschichtaufbau, der im Querschnitt eine homogene Dicke aufweist, auch im Nahtbereich. Auf die Auswirkungen des Einbaus einer solchen Datenseite, in ein Passbuch sowie auf Herstellung und Handhabung eines entsprechenden Passbuches geht die Schrift nicht ein. Selbst wenn sie weich ist, wirkt eine in ein Paßbuch eingenähte Datenseite, die im Nahtbereich z.B. die Dicke einer Normchipkarte aufweist, aber auffächernd. Dies ist nicht erwünscht. WO 2009/153056 A2 schlägt weiterhin vor ,die Möglichkeit zur Herstellung von Folien mit nebeneinander liegenden elastischen und steifen Bereiche zu nutzen, um eine Biegeachse zur Verwendung besonders strapazierfähiger, steifer Materialien gezielt zu versteifen. Durch die besonderen erforderlichen Materialien ist eine solche Maßnahme aber stets mit erhöhten Kosten verbunden.

Aus der WO 2010/097226 A1 ist desweiteren eine Datenseite mit einem mehrschichtigen Aufbau mit einer vorspringenden Einnählasche bekannt. Der Datenseitenaufbau selbst enthält dabei steife und weiche Schichten. Die vorspringenden, die Einnählasche bildenden Schichten sind durchweg weich. Grundlegende technische Lehre der Schrift ist, dass eine Schichtstruktur mit unterschiedlich steifen Zonen erreicht wird, indem Schichten mit unterschiedlicher Steifigkeit in geeigneter Weise übereinander angeordnet werden: in weichen Bereichen werden nur weiche Schichten übereinander angeordnet, in steifen Zonen weiche Schichten und steife Schichten. Aufgabe der Erfindung ist es, einen insbesondere als Datenseite geeigneten mehrschichtigen Datenträger anzugeben, der gut herstellbar ist und der gezielt einen besonders weichen Bereich aufweist, der sich zum Einnähen der Datenseite in ein Passbuch eignet.

Diese Aufgabe wird gelöst durch einen Datenträger mit den Merkmalen des Anspruchs 1. Die Aufgabe wird auch gelöst durch ein Verfahren mit den Merkmalen des unabhängigen Anspruchs 6. Vorteilhafte Weiterbildungen und zweckmäßige Ausgestaltungen ergeben sich ferner aus den Merkmalen der abhängigen Ansprüche.

Der erfindungsgemäße mehrschichtige Datenträger zeichnet sich dadurch aus, dass er gut herstellbar und das Zusammenspiel von weichen und steifen Bereichen genau reproduzierbar ist. Zum Erreichen der gewünschten Flexibilität sind insbesondere keine aufwendigen Nachbearbeitungsschritte erforderlich. In besonders vorteilhafter Weise eignet sich der erfindungsgemäße Datenträger als Datenseite für ein Passbuch. Ein erheblicher Herstellungsvorteil wird hierbei erreicht, indem durch einfaches Übereinanderanordnen eines Schichtenstapels und einer koextrudierten Folie ein vorstehender Randbereich geschaffen wird. In besonders vorteilhafter Weise wird dabei eine Streifenfolie eingesetzt, bei der der weiche Bereich eine geringere Dicke aufweist als der steife Bereich.

Das erfindungsgemäße Verfahren zur Herstellung eines Datenträgers hat den Vorteil, daß es insbesondere die Herstellung einer Datenseite erlaubt, die einen weichen Laschenbereich aufweist, mit dem sie in ein Paßbuch eingenäht werden kann. Der besondere Vorteil der Erfindung besteht dabei darin, dass der Laschenbereich in einfacher Weise hergestellt werden kann, indem in dem Datenträgeraufbau eine Abstufung gebildet wird, so dass ein vorgezogener Randbereich entsteht. Der Übergang vom steifen, eigentlichen Datenseitenbereich in den weichen Laschenbereich erfolgt dabei in einer genau definierten Zone des Datenträgers.

Unter Bezugnahme auf die Zeichnung wird ein Ausführungsbeispiel der Erfindung nachfolgend näher beschrieben.

Es zeigen:
- Fig.1: eine koextrudierte Streifenfolie,
- Fig. 2: eine koextrudierte Streifenfolie mit gleichfalls koextrudierter Deck- und Unterfolie,
- Fig. 3: eine koextrudierte Streifenfolie mit zwei koextrudierten Deckfolien,
- Fig. 4: einen Aufbau eines mehrschichtigen Datenträgers mit koextrudierter Streifenfolie und weiteren Folien,
- Fig. 5: einen Aufbau eines mehrschichtigen Datenträgers mit koextrudierter Streifenfolie, die im weichen Bereich einen verringerten Querschnitt aufweist,
- Fig. 6: eine nicht erfindungsgemäße Überkreuzanordnung zweier koextrudierter Streifenfolien,
- Fig. 7: eine Aufsicht auf den Aufbau nach Fig. 6 mit in der Innenzone angeordneter Chipspulenanordnung,
- Fig. 8: einen Querschnitt durch die Ansicht nach Fig. 7 entlang der Linie A-A,
- Fig. 9: einen Aufbau eines mehrschichtigen, aus zwei koextrudierten Streifenfolien aufgebauten Datenträgers mit in der Innenzone angeordneter Chipspulenanordnung, und
- Fig. 10: das Prinzip einer Laminieranordnung zur Herstellung eines Aufbaus gemäß den Fig. 4, 5 oder 9.

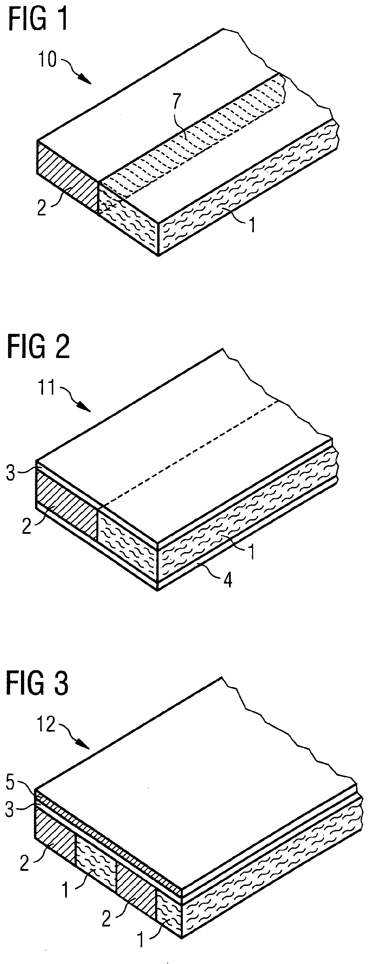

Fig. 1 zeigt die Grundform einer einstückigen durch Koextrusion hergestellten Streifenfolie 10 mit einem Streifen 1 aus weichem Material und einem horizontal in der Fläche daneben ausgebildeten Streifen 2 aus steifem Material. Der Übergang von weichem Material in steifes erfolgt nahezu übergangslos entlang einer vertikalen Übergangszone 7.

Die Darstellung in Fig.1 wie auch die Darstellungen in den anderen Figuren sind nicht maßstäblich zu verstehen, sondern dienen nur zur prinzipiellen Erläuterung. Praktisch herstellbare Streifenfolien besitzen z.B. eine Dicke von 50 bis 850 µm, besonderes zweckmäßig 100 bis 600 µm, und eine Breite von 30 bis 150 cm. Die Breite der Streifen 1, 2 beträgt zweckmäßig wenigstens 1 mm, um noch gut als Streifen wahrnehmbar zu sein, kleinere Breiten sind aber möglich. Eine Streifenfolie 10 kann eine Vielzahl von Streifen 1, 2 aufweisen, die sich dabei auch in anderen Materialeigenschaften von den benachbarten Streifen unterscheiden können. Die Streifen 1 aus weichem Material können aus thermoplastischen Elastomeren bestehen, die Streifen 1 aus hartem Material aus Thermoplasten. Mögliche thermoplastische Elastomere sind zum Beispiel thermoplastische Poyurethan-Elastomere, TPE-U wie Desmophan, thermoplastische Styrol-Copolymer-Elastomere, TPE-S, thermoplastische Polyolefin-Elastomere, TPE-O wie Vyram, thermoplastische Polyolefin-Elastomer-Blends, TPE-V wie Santoprene, thermoplastische Copolyamid-Elastomere, TPE-A wie Vestamid, thermoplastische Copolyester-Elastomere oder TPE-E wie Arnite. Mögliche Thermoplaste sind generell alle "technischen Thermoplaste" wie Polyester, Copolyester, Polycarbonate, ABS, PA, Polyolefine, PVC oder Mischungen davon.

Die Eigenschaftswörter "weich" und "steif" sollen insbesondere einen Unterschied in der Biegesteifigkeit zwischen zwei näherungsweise mit gleicher Geometrie ausgeführten Körpern bezeichnen und sind vor allem relativ zu verstehen. In praktischen Folienausführungen sind beide Streifen 1, 2 biegsam, eine Auslenkung des Steifens 1 aus weichem Material in Erstreckungsrichtung des Streifens kann aber mit noch geringerer Kraft bewirkt werden als eine Auslenkung eines Streifens 2 aus steifem Material.

Die in Fig. 1 gezeigte Folie lässt sich insbesondere mit einer Koextrusionsanordnung herstellen, wie sie in der eingangs erwähnten WO 2009/153056 A2 beschrieben ist, auf die deshalb hier und ebenso für die weiteren noch beschriebenen Ausführungsbeispiele ausdrücklich verwiesen wird

Fig. 2 zeigt eine Variante einer koextrudierten Streifenfolie 11, die wiederum einen Streifen 1 von weichem Material sowie einen Streifen 2 von steifem Material aufweist. Zusätzlich besitzt die koextrudierte Streifenfolie 11 nach Fig. 2 eine vollflächige Deckschicht 3 sowie eine ebenfalls vollflächige Unterschicht 4. Streifen 1, 2 und Deck- bzw. Unter schicht 3,4 werden gemeinsam koextrudiert.

Fig. 3 zeigt eine weitere Variante einer koextrudierten Streifenfolie 12, die wieder einen ersten Streifen 1 aus weichem Material sowie einen zweiten Streifen 2 aus steifem Material aufweist. Weiterhin weist die Streifenfolie 12 nach Fig. 3 zwei übereinander ausgebildete vollflächige Deckschichten, nämlich eine erste Deckschicht 3 und eine zweite Deckschicht 5 auf, die zusammen mit den Folienstreifen 1 und 2 koextrudiert werden. Die vollflächigen Deckschichten 3,5 können aus unterschiedlichen Materialien bestehen und erlauben es, der Streifenfolie 12 bestimmte gewünschte Eigenschaften zu verleihen. Beispielsweise kann eine der vollflächigen Deckschichten 3, 5 Sicherheitselemente in Form von fluoreszierenden Partikeln enthalten und die andere als Schutzschicht dienen.

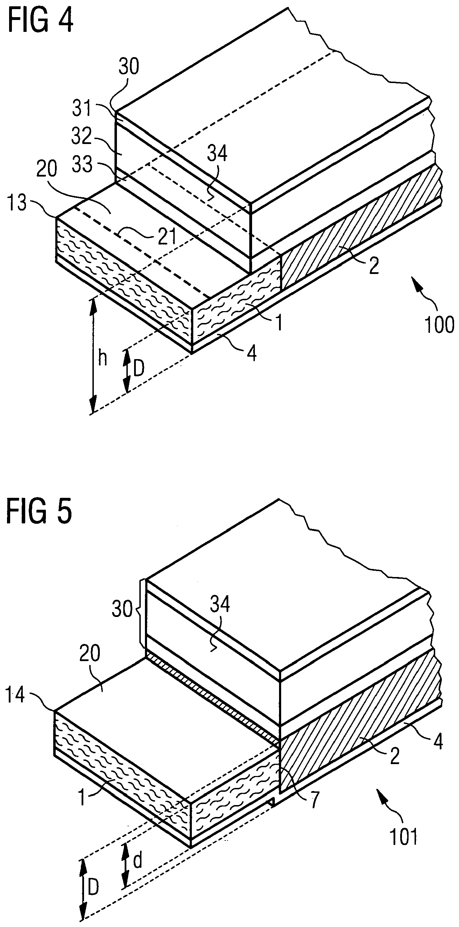

Fig. 4 zeigt in Schrägaufsicht einen schematisierten Querschnitt durch den Aufbau einesmittels einer koextrudierten Streifenfolie 13 aufgebauten mehrschichtigen Datenträgers 100, der neben der Streifenfolie 13 wenigstens eine weitere Folie 30 aufweist. Der Datenträger 100 besitzt zweckmäßig Abmessungen, die es einer Person erlauben, ihn jederzeit mitzuführen. Insbesondere kann der Datenträger eine Datenseite für ein Passbuch sein. Er weist einen besonders herausgezogenen Randereich 20 auf, der als Lasche dient, mit der der Datenträger 100 mittels einer, in Form ein strichlierten Linie angedeuteten Naht 21 in ein - nicht gezeigtes - Passbuch einnähbar ist.

Der Datenträger 100 basiert auf einer koextrudierten Streifenfolie 13, die so angeordnet ist, dass die Streifen 1, 2 parallel zum - nicht gezeigten - Buchrücken des Paßbuches verlaufen. Die Streifenfolie 13 weist einen Streifen 1 aus weichem Material und einen Streifen 2 aus steifem Material auf. Sie besitzt zudem eine vollflächige Unterschicht 4.

Mit der koextrudierten Streifenfolie 13 verbunden ist eine weitere Folie 30 in Gestalt eines Schichtenstapels , der, wie in Fig. 4 angedeutet, seinerseits aus mehreren Einzelschichten 31, 32, 33 bestehen kann. Der Schichtenstapel 30 überdeckt nur einen Teil der Streifenfolie 13 und läßt eine Randzone über dem Streifen 1 aus weichem Material unbedeckt, die den im folgenden Laschenbereich 20 genannten vorgezogenen Randbereich bildet. In Relation zu dem im Streifen 1 der koextrudierten Streifenfolie verwendeten weichen Material sind die Schichten des Schichtenstapels 30 vorzugsweise durchweg steif ausgebildet. Der Schichtenstapel 30 bildet zusammen mit dem damit verbundenen Anteil der koextrudierten Streifenfolie 13 einen Schichtenstapelbereich. Der Schichtenstapelbereich bildet den Datenbereich einer Datenseite, die zur Aufnahme von Informationen und Daten aller Art dient, wie z.B. aufgedruckte oder eingelaserte alphanumerische Zeichen, aufgedruckte oder eingelaserte bildliche Darstellungen oder aufgebrachte Sicherheitselemente, etwa Hologramme. Desweiteren kann der Schichtenstapel 30 einen oder mehrere elektronische Schaltkreise mit zugehörigen Schnittstellen nach außen aufweisen, in denen ebenfalls Daten abgelegt sein können.

Wie in Fig. 4 angedeutet ist die koextrudierte Streifenfolie 13 gegenüber dem Schichtenstapel 30 vorgezogen, so dass der Laschenbereich 20 entsteht, der als Lasche dient. Der Laschenbereich 20 besteht im wesentlichen aus dem Streifen 1 aus weichem Material und besitzt eine im Vergleich zur Gesamthöhe h der Datenseite kleine Dicke D. Der Streifen 1 aus weichem Material kann sich, wie in Fig. 4 angedeutet, ohne weiteres teilweise unter den Schichtenstapel 30 erstrecken. Ebenso ist es auch möglich, dass sich der Streifen 2 aus steifem Material zu einem Teil über den Schichtenstapel 30 hinauserstreckt und mit diesem Teil Bestandteil der Lasche 20 wird. Die koextrudierte Streifenfolie 13 weist in einer zweckmäßigen Realisierung, wie sie in Fig. 4 angedeutet ist, nur genau zwei Streifen 1, 2 aus unterschiedlichen Materialien auf, wobei sich der Streifen 2 aus steifem Material im wesentlichen vollständig unter den Schichtenstapel 30 erstreckt und der Streifen aus weichem Material im wesentlichen die Lasche 20 bildet.

Ein Datenträger 100 mit einem Aufbau, wie er in Fig. 4 dargestellt ist, kann an der Lasche 20 herstellungstechnisch leicht in ein Passbuch eingenäht werden. Da die Lasche 20 im wesentlichen aus dem weichen Material des Streifens 1 gebildet ist, erlaubt sie das Verbiegen des Datenträgers 100 und damit das Umblättern in einem Passbuch. Durch die im Vergleich zur Datenseite geringe Dicke D des Laschenbereichs 20 entwickelt die Datenseite im eingenähten Zustand auch keine Rückstellkraft, die das Passbuch in einen geöffneten Zustand treibt.

Durch geeignete Temperatur- und Massenstromführung bei der Koextrusion und geeigneter Materialauswahl kann die Koextrusion einer Streifenfolie 10, wie sie in Fig. 1 dargestellt ist, so gestaltet werden, dass die Streifen 1 aus dem weichen Material eine etwas geringere Dicke d aufweisen als die Streifen 2 aus dem steifen Material, deren Dicke mit D bezeichnet ist. Dieser Effekt kann vorteilhaft genutzt werden, um die Gestaltung eines als Datenseite verwendbaren tragbaren Datenträgers 100 weiter zu verbessern. Dies ist in Fig. 5 veranschaulicht. Der darin schematisch in Schrägaufsicht dargestellte Aufbau 101 eines tragbaren Datenträgers besteht wiederum aus einer koextrudierten Streifenfolie 14 als Grundschicht und einem damit verbundenen Schichtenstapel 30. Die koextrudierte Streifenfolie 14 weist einen Streifen 1 aus weichem Material und einen Streifen 2 aus steifem Material auf, wobei die Übergangszone 7 zwischen den beiden Materialien im Beispiel der Fig. 5 so gelegt wurde, dass sie genau mit der Stirnseite 34 des Schichtenstapels 30 fluchtet. Desweiteren besitzt die koextrudierte Streifenfolie 14 eine vollflächige Grundschicht 4, die mit den beiden Streifen 1 und 2 koextrudiert wurde.

Im Unterschied zu dem Ausführungsbeispiel nach Fig. 4 besitzt in Fig. 5 der Streifen 1 aus weichem Material eine kleinere Dicke als der Streifen 2 aus steifem Material. Der Dickenunterschied, der zwar in der Praxis nur sehr gering ist, wird jedoch ohne Nachbearbeitung alleine durch die Verfahrensführung der Koextrusion erreicht. Die abermals verringerte Dicke d des Laschenberiechs 20 verbessert nochmals die Eigenschaften des Aufbaus 101 gemäß Fig. 5 bei Verwendung als Datenseite in einem Passbuch. Denn die geringere Dicke d der Lasche 20 verringert nochmals die auf ein Auffächern eines Passbuches gerichtete, von der eingenähten Lasche ausgehende Druckkraft.

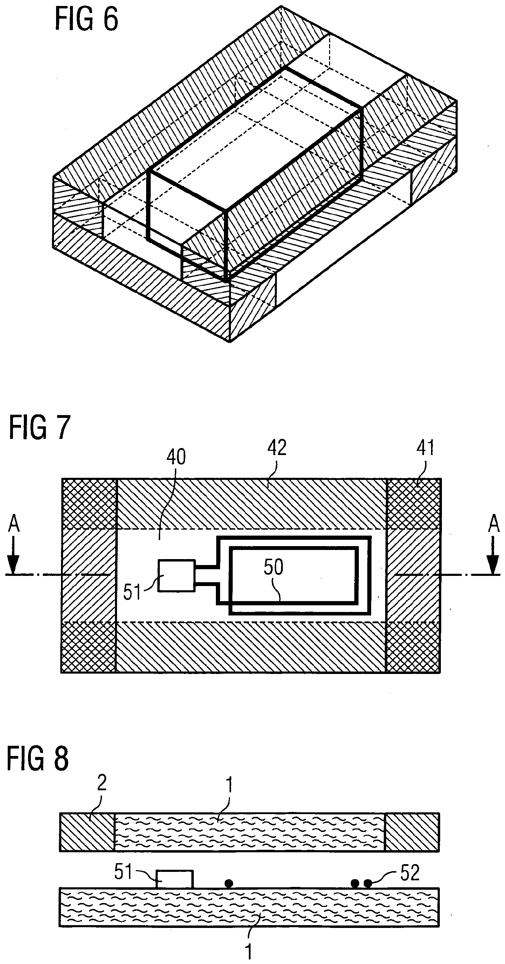

Eine weitere mögliche, außerhalb der Erfindung liegende Anwendung einer koextrudierten Streifenfolie 10 ergibt sich, wenn zwei Streifenfolien 10 oder zwei Teile derselben Streifenfolie, die jeweils drei Streifen aufweisen, von denen jeweils der mittlere aus weichem Material besteht und die beiden äußeren aus hartem, überkreuz angeordnet und so miteinander verbunden werden. Die Verbindung kann z.B. durch Laminieren erfolgen. Es entsteht dann, wie in Fig. 6 und weiter in den Fig. 7 und 8 veranschaulicht, ein Aufbau, der eine sich über beide Streifenfolienlagen erstreckende Innenzone 40 aus weichem Material aufweist, die nach allen Seiten hin von einem Rahmen 41, 42 aus steifem Material eingefasst ist. Dabei überlagern sich in den Eckbereichen 41 jeweils zwei Bereiche aus steifem Material während entlang den Seitenkanten 42 außerhalb der Eckbereiche 42 jeweils ein Streifenbereich aus weichem Material über einem Streifenbereich aus hartem Material liegt. Der in Fig. 6 gezeigte Aufbau eignet sich direkt oder nach Verbindung mit weiteren Schichten und nach Aufbringen von Daten als selbständiger tragbarer Datenträger, etwa als Ausweis. Ebenso kann er nach dem in Fig. 4 gezeigten Prinzip mit einer weiteren Streifenfolie verbunden und dann als Datenseite für ein Paßbuch eingesetzt werden.

Fig. 7 veranschaulicht in Aufsicht den in Fig. 6 gezeigten Aufbau. Die Innenzone 40 aus weichem Material wird von einem Rahmen 41, 42 aus steifem Material umgeben. Der resultierende Aufbau erlaubt es, in der Innenzone elektronische Bauelemente 50,51 anzuordnen, die empfindlich gegen von der Umgebung übertragenen Spannungsbelastungen sind. Ein solches Bauelement ist beispielsweise, wie in Fig. 7 angedeutet, eine Antennenspule 50, wie sie zum Aufbau von Transponderanordnungen typischerweise eingesetzt wird; ein anderes Bauelement ist ein IC 51, der mit der Antennenspule 50 verbunden ist und zusammen mit dieser einen Transponder bildet. Die Innenzone 40 kann insbesondere so gestaltet sein, dass ein empfindliches Bauelement 50, 51 darin vollständig Platz findet. Die unterschiedlichen Biegesteifigkeiten der Bereiche 40, 41, 42 kann auch dazu genutzt werden, zugspannungsempfindliche Bauelemente 50,51 in der Innenzone 40 und druckempfindliche Bauelemente in einer Randzone 41, 42 anzuordnen.

Fig. 8 zeigt den in Fig. 7 dargestellten Aufbau im Querschnitt entlang der Linie A-A. Wie zu erkennen, ist insbesondere die Antennenspule 50 nur von Material umgeben, das von weichen Streifen 1 bildet wird, und in dieses eingebettet. Auf den Aufbau wirkende Materialspannungen werden dadurch weniger direkt auf die Spulenstruktur übertragen.

Das in den Fig. 6 bis 8 veranschaulichte Konzept zum Aufbau von Mehrschichtkörpern mit weichen Innenzonen 40 läßt sich auch mit Streifenfolien 10 mit mehr als drei Streifen realisieren. Dabei können die Streifen 1 so gelegt werden, dass mehrere unabhängige Innenzonen 40 entstehen und/ oder die Streifen können dazu genutzt werden die Biegesteifigkeit der Eck- und Rahmenzonen 41,42 gezielt zu gestalten.

In die weichen Innenzonen können ferner nicht nur zugbelastungsempfindliche sondern grundsätzlich beliebige Bau- oder Funktionselemente plaziert werden. Funktionselemente können z.B. Sicherheitselemente sein. Sehr effektvoll kann vorgesehen sein, dass insbesondere die die weiche Innenzone 40 bildenden Streifen aus einem transparenten Material bestehen, so dass die darin angeordneten Bau- oder Funktionselemente ganz oder teilweise sichtbar sind.

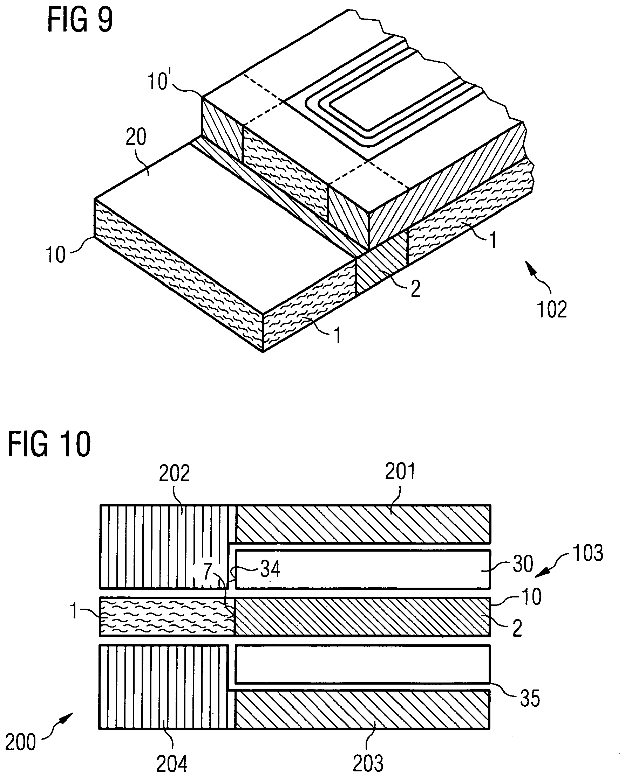

Fig. 9 veranschaulicht eine Möglichkeit zur Kombination der in den Fig. 6 bis 8 dargestellten Ausführung mit der Ausführung nach Fig. 4. Die im Beispiel untere koextrudierte Streifenfolie 10 wurde dabei mit einem Streifen mehr als die obere ausgeführt, wobei der zusätzliche Streifen 1 aus weichem Material besteht und gegenüber der orthogonal plazierten oberen Streifenfolie 10' vorsteht und einen Laschenbereich 20 bildet. Dieser verhält sich wie der Laschenbereich 20 in der Ausführungsform nach Fig. 4 und erlaubt es, den in Fig. 9 dargestellten Aufbau 102 insbesondere als Datenseite für ein Passbuch zu nutzen.

Fig. 10 veranschaulicht das Prinzip einer Laminieranordnung zur Herstellung von Aufbauten, wie sie in den Fig. 4, 5 und 9 angedeutet sind. Der in Fig. 10 zugrundgelegte Aufbau 103 besteht wiederum aus einer zentralen koextrudierten Streifenfolie 10 mit einem Streifen 1 aus weichem Material und einem Streifen 2 aus steifem Material, die in einer vertikalen Übergangszone 7 aneinandergrenzen. Auf beiden Seiten der koextrudierten Streifenfolie 10 sind jeweils weitere Folien 30, 35 plaziert, die die koextrudierte Streifenfolie 10 teilweise überdecken und einen Randbereich 20 unbedeckt lassen. Die Folien können wiederum jeweils als Schichtenstapel ausgeführt sein. Der Aufbau 103 besitzt damit im Querschnitt wie die Aufbauten gemäß den Fig. 4,5 und 9 einen Laschenbereich 20 und einen Schichtenstapelbereich. Der Aufbau 103 ist schematisch zu verstehen, die beteiligten Schichten 10, 30, 35 können auch interne Schichtstrukturen besitzen, die der Übersichtlichkeit halber weggelassen sind.

Die Folien 30, 35 sind so angeordnet sind, daß ihre Stirnseiten 34 mit der Übergangszone 7 der koextrudierten Streifenfolie 10 fluchten. Die koextrudierte Streifenfolie 10 und die Folien 30, 35 sind zunächst nicht oder nur lose verbunden. Erst in der Laminieranordnung 200 werden die Folien 30, 35 und der zwischen ihnen befindliche Bereich der koextrudierten Streifenfolie 10 durch Laminieren dauerhaft miteinander verbunden.

Der Aufbau 103 wird zum Verbinden der koextrudierten Streifenfolie 10 und der Folien 30,35 in einer Laminieranordnung 200 angeordnet, die beidseitig jeweils zum einen Heizzonen 201, 203 und zum anderen Kühlzonen 202, 204 aufweist. Heizzonen 201, 203 und Kühlzonen 202, 204 sind unmittelbar benachbart angeordnet. Die Anordnung des Aufbaus 103 in der Laminieranordnung 200 erfolgt dabei so, daß der Übergang zwischen Heiz- und Kühlzonen genau mit der Übergangszone 7 zwischen dem Laschenbereich 20 und dem Schichtenstapelstapelbereich fluchtet. Die Kühlzonen 202, 204 springen zudem zweckmäßig vertikal gegenüber den Heizzonen 201, 203 vor, um die unterschiedliche Dicken des Aufbaus 103 im Bereich des vorspringenden Streifens 1 und im Schichtenstapelbereich mit den weiteren Folien nachzubilden. Die Heizzonen 201,203 bilden eine an sich bekannte Laminiervorrichtung; sie werden bei Temperaturen von z.B. 110° bis 150° C betrieben, wobei zusätzlich Druck ausgeübt wird. Die Kühlzonen 202,204 werden z.B. bei 20° bis 40°C betrieben.

Die Nutzung einer Laminieranördnung 200 gemäß Fig. 10 zur Herstellung von Aufbauten 103 bewirkt, daß der Übergang vom Schichtenstapelbereich in den Laschenbereich 20, d.h. der Übergang von einem Streifen aus steifem Material 2 in einen Streifen 1 aus weichem Material, definiert und formstabil erfolgt. Beim Laminieren des Schichtenstapelbereichs bildet sich keine nennenswerte Überganszone in den Laschenbereich 20, in der weiches Material in steifes übergeht.

Unter Beibehaltung des Grundgedankens der Erfindung, nämlich der gezielten Ausbildung von Datenträgern mit Bereichen mit unterschiedlicher Biegesteifigkeit durch Verwendung von koextrudierten Streifenfolien, sind weitere Abwandlungen der vorbeschrieben Ausführungsbeispiele möglich. So ist die Ausbildung des Laschenbereichs 20 nicht auf Datenseiten für Paßbücher beschränkt sondern kann z.B. auch zur Herstellung von Labeln oder Anhängern für weiche Gegenstände genutzt werden. Die genaue Gestaltung der Laminieranordnung und die verwendeten Laminier- bzw. Kühlparameter werden zweckmäßig selbstverständlich an den jeweils verarbeiteten Aufbau und die verwendeten Materialien angepaßt. Dabei können z.B. andere Temperaturen für das Heizen bzw. Kühlen zweckmäßig sein.

## Patentansprüche

1. Mehrschichtiger Datenträger mit mindestens einer einstückig koextrudierten Streifenfolie sowie mindestens einer weiteren damit verbundenen Folie, wobei die koextrudierte Streifenfolie in der Fläche aus zwei bezüglich wenigstens einer Eigenschaft verschiedenen Materialien besteht, die als Streifen nebeneinander ausgebildet sind, wobei eines der Materialien weicher ist als das andere, **dadurch gekennzeichnet, dass** die mindestens eine weitere Folie (30) die koextrudierte Streifenfolie (13) nur teilweise überdeckt und zumindest eine Randzone eines Streifens aus weichem Material unbedeckt läßt, welche einen vorgezogenen Randbereich (20) bildet.

2. Datenträger nach Anspruch 1, **dadurch gekennzeichnet, dass** der Randbereich (20) aus weichem Material eine geringere Dicke (d) besitzt als der angrenzende Bereich aus steifem Material.

3. Datenträger nach Anspruch 1, **dadurch gekennzeichnet, dass** die koextrudierte Streifenfolie (10) mindestens eine weitere vollflächige Schicht (3, 4, 5) aufweist, die zusammen mit den Streifen (1, 2) koextrudiert ist.

4. Datenträger nach Anspruch 3, **dadurch gekennzeichnet, dass** die mindestens eine weitere vollflächige Schicht (3, 4, 5) zur Stabilisierung oder als Funktionsschicht dient.

5. Datenträger nach Anspruch 1, **dadurch gekennzeichnet, dass** die koextrudierte Streifenfolie (11) beidseitig je eine weitere vollflächige Schicht (3,4,5) besitzt, die zusammen mit den Streifen (1, 2) koextrudiert ist.

6. Verfahren zur Herstellung eines mehrschichtigen Datenträgers mit den Schritten:
Bereitstellen einer einstückig koextrudierten Streifenfolie (10), die in der Fläche aus zwei bezüglich wenigstens einer Eigenschaft verschiedenen Materialien besteht, die als Streifen (1, 2) nebeneinander ausgebildet sind, wobei eines der Materialien weicher ist als das andere,
Bereitstellen zumindest einer weiteren Folie (30), Übereinanderplazieren der koextrudierten Streifenfolie (10) und der zumindest einen weiteren Folie (30), so daß die weitere Folie (30) zumindest einen Randbereich (20) der koextrudierten Streifenfolie (10) unbedeckt läßt, Bereitstellen einer Laminieranordnung (200), die eine Heizzone (201, 203) und eine daran angrenzende Kühlzone (202, 204) aufweist,
Anordnen der koextrudierten Streifenfolie (10) und der weiteren Folie (30) in der Laminieranordnung (200) so, daß die Kühlzone (202, 204) auf den Randbereich (20) einwirkt und die Heizzone (201, 203) auf den Bereich der Folie (30),
Laminieren der Folie (30) mit der koextrudierten Streifenfolie (10) bei gleichzeitigem Kühlen des Randbereichs (20).

7. Verfahren nach Anspruch 6, **dadurch gekennzeichnet, daß** die koextrudierte Streifenfolie (10) so zu der weiteren Folie (30) angeordnet wird, daß der Randbereich (20) von einem Streifen (1) aus weichem Material gebildet wird.

## Claims

1. A multilayer data carrier with at least one integrally coextruded strip foil and at least one further foil connected thereto, wherein the coextruded strip foil in the plane consists of two materials that differ with respect to at least one property, said materials being configured as strips disposed side by side, wherein one of the materials is softer than the other, **characterized in that** the at least one further foil (30) covers the coextruded strip foil (13) only partially and leaves uncovered at least one edge zone of a strip of soft material which forms a projecting edge region (20).

2. The data carrier according to claim 1, **characterized in that** the edge region (20) of soft material has a lower thickness (d) than the adjoining region of rigid material.

3. The data carrier according to claim 1, **characterized in that** the coextruded strip foil (10) has at least one further full-area layer (3, 4, 5) which is coextruded together with the strips (1, 2).

4. The data carrier according to claim 3, **characterized in that** the at least one further full-area layer (3, 4, 5) serves for stabilization or as a functional layer.

5. The data carrier according to claim 1, **characterized in that** the coextruded strip foil (11) has on both of its sides respectively one further full-area layer (3, 4, 5) which is coextruded together with the strips (1, 2).

6. A method for manufacturing a multilayer data carrier with the steps of:
making available an integrally coextruded strip foil (10) consisting in the plane of two materials that differ with respect to at least one property, said materials being configured as strips (1, 2) disposed side by side, wherein one of the materials is softer than the other,
making available at least one further foil (30),
placing the coextruded strip foil (10) and the at least one further foil (30) over one another, so that the further foil (30) leaves uncovered at least an edge region (20) of the coextruded strip foil (10),
making available a laminating arrangement (200) having a heating zone (201, 203) and a cooling zone (202, 204) adjoining thereto,
arranging the coextruded strip foil (10) and the further foil (30) in the laminating arrangement (200) such that the cooling zone (202, 204) acts on the edge region (20) and the heating zone (201, 203) acts on the region of the foil (30),
laminating the foil (30) with the coextruded strip foil (10) with simultaneous cooling of the edge region (20).

7. The method according to claim 6, **characterized in that** the coextruded strip foil (10) is arranged relative to the further foil (30) such that the edge region (20) is formed by a strip (1) of soft material.

## Revendications

1. Support de données multicouche ayant au moins un film en ruban d'un seul tenant co-extrudé ainsi qu'au moins un autre film y étant joint, cependant que le film en ruban co-extrudé consiste, dans la surface, en deux matériaux qui sont différents quant à au moins une propriété et qui sont réalisés sous forme de rubans juxtaposés, cependant qu'un des matériaux est plus tendre que l'autre, **caractérisé en ce que** le au moins un autre film (30) ne recouvre que partiellement le film en ruban (13) co-extrudé et laisse non recouverte au moins une zone de bordure d'un ruban en matériau tendre qui constitue une zone de bordure (20) en avancée.

2. Support de données selon la revendication 1, **caractérisé en ce que** la zone de bordure (20) en matériau tendre a une épaisseur (d) plus faible que la zone adjacente en matériau rigide.

3. Support de données selon la revendication 1, **caractérisé en ce que** le film en ruban co-extrudé (10) comporte au moins une autre couche à pleine surface (3, 4, 5) qui est co-extrudée avec les rubans (1, 2).

4. Support de données selon la revendication 3, **caractérisé en ce que** la au moins une autre couche à pleine surface (3, 4, 5) sert à la stabilisation ou en tant que couche fonctionnelle.

5. Support de données selon la revendication 1, **caractérisé en ce que** le film en ruban co-extrudé (11) comporte des deux côtés respectivement une autre couche à pleine surface (3, 4, 5) qui est co-extrudée avec les rubans (1, 2).

6. Procédé de fabrication d'un support de données multicouche, comprenant les étapes :
Mise à disposition d'un film en ruban (10) d'un seul tenant co-extrudé qui, dans la surface, consiste en deux matériaux qui sont différents quant à au moins une propriété et qui sont réalisés sous forme de rubans (1, 2) juxtaposés, cependant qu'un des matériaux est plus tendre que l'autre,
Mise à disposition d'au moins un autre film (30),
Superposition du film en ruban (10) co-extrudé et du au moins un autre film (30) de telle façon que l'autre film (30) laisse non recouverte au moins une zone de bordure (20) du film en ruban (10) co-extrudé,
Mise à disposition d'un agencement de laminage (200) qui comporte une zone de chauffage (201, 203) et une zone de refroidissement (202, 204) y étant adjacente,
Agencement du film en ruban (10) co-extrudé et de l'autre film (30) dans l'agencement de laminage (200), de telle sorte que la zone de refroidissement (202, 204) agit sur la zone de bordure (20) et la zone de chauffage (201, 203) agit sur la zone du film (30),
Laminage du film (30) avec le film en ruban (10) co-extrudé en même temps que refroidissement de la zone de bordure (20).

7. Procédé selon la revendication 6, **caractérisé en ce que** le film en ruban (10) co-extrudé est agencé de telle façon par rapport à l'autre film (30) que la zone de bordure (20) est constituée par un ruban (1) de matériau tendre.
